# EUROPEAN PATENT APPLICATION

(11) **EP 2 637 356 A1**
(43) Date of publication of application: **11.09.2013**
(21) Application number: 11852650.8
(22) Date of filing: 19.12.2011
(51) Int. Cl.: H04L 12/24, H04L 29/12, H04L 12/14

(54) **METHOD AND DEVICE FOR PROVIDING USER INFORMATION TO CARRIED GRADE NETWORK ADDRESS TRANSLATION CGN APPARATUS**

(30) Priority: 29.12.2010 CN 201010612284
(71) Applicant: Huawei Technologies Co., Ltd., Shenzhen, Guangdong 518129 (CN)
(72) Inventor: QIAN, Guofeng, Shenzhen Guangdong 518129 (CN); LI, Guanfeng, Shenzhen Guangdong 518129 (CN); GUO, Dayong, Shenzhen Guangdong 518129 (CN); WANG, Shuxiang, Shenzhen Guangdong 518129 (CN)
(74) Representative: Lord, Michael
(86) International application number: PCT/CN2011/084179
(87) International publication number: WO 2012/089039

(57) **Abstract**

Embodiments of the present invention provide a method for providing user information to a CGN device, and the embodiments of the present invention also provide a RADIUS server and a BRAS device, so as to provide the user information to the CGN device and enable the CGN device to perform user-based network management. The method of the embodiments of the present invention includes: receiving, by the RADIUS server, accounting start request information of a user sent by the BRAS device, where the accounting start request information carries user information of the user, and the user information includes: a user identity and management information of the user; and sending, by the RADIUS server, the user information to a CGN device, so that the CGN device is capable of performing network management on the user according to the user information.

## Description

This application claims priority to Chinese Patent Application No. 201010612284.1, filed with the Chinese Patent Office on December 29, 2010 and entitled "METHOD AND DEVICE FOR PROVIDING USER INFORMATION TO CARRIER GRADE NETWORK ADDRESS TRANSLATION CGN DEVICE", which is incorporated herein by reference in its entirety.

### TECHNICAL FIELD

The present invention relates to the field of communications technologies, and in particular, to a method and apparatus for providing user information to a CGN device.

### BACKGROUND

A carrier grade network address translation (CGN, Carried Grade NAT) device is deployed in a carrier network, which improves smooth transition of Internet Protocol version 4 (IPv4, Internet Protocol Version 4) and Internet Protocol version 6 (IPv6, Internet Protocol Version 6) and promotes the evolution by integrating multiple evolution mechanisms including tunnel and network address translation (NAT, Network Address Translation).

A broadband remote access server (BRAS, Broadband Remote Access Server) device is a new access gateway oriented towards a broadband network application, it is located at an edge layer of a backbone network, and may complete data access of the broadband network of a user. The BRAS device mainly completes functions in two aspects. The first aspect is a network bearer function, for example, the functions of terminating a point to point protocol over Ethernet (PPPoE, Point to Point Protocol over Ethernet) connection of a user terminal, sending a domain name and a password of a user to a remote authentication dial in user service (RADIUS, Remote Authentication Dial In User Service) server for authentication, and converging the traffic of the user terminal. The second aspect is a control implementation function, for example, the function of implementing authentication, charging, and management of access of a user terminal in coordination with an authentication system, an accounting system, a customer management system, and a service policy control system.

In the prior art, a CGN device and a BRAS device are completely independent from each other, between which no information can be transferred. Because the information such as a user name, a password, and a user domain are stored in the BRAS device, the CGN device does not have the information such as the user name, the password, and the user domain. As a terminal of a dual stack lite (DS Lite, Dual Stack Lite) tunnel, the CNG device can identify a user based on only an IPv6 address. In fact, usually an IPv6 address is randomly allocated to a user, and relevant information of the user cannot be obtained from the IPv6 address. Therefore, the CGN device can perform simple management based on only the information such as a virtual local area network (VLAN, Virtual Local Area Network) and an IP address, and cannot perform user-based network management.

### SUMMARY

Embodiments of the present invention provide a method and apparatus for providing user information to a CGN device, so as to provide user information to the CGN device and enable the CGN device to perform user-based network management.

According to an aspect of an embodiment of the present invention, a method for providing user information to a CGN device, includes:
receiving, by a RADIUS server, accounting start request information of a user sent by a BRAS device, where the accounting start request information carries user information of the user, and the user information includes: a user identity and management information of the user; and
sending, by the RADIUS server, the user information to a CGN device, so that the CGN device is capable of performing network management on the user according to the user information.

Optionally, the user identity includes one or more of the following: a user name, a user password, a user type, a user Internet Protocol IP address, a user media access control MAC address, and user location information.

Optionally, the management information of the user includes one or more of the following: user bandwidth, a user access right, a user priority, a user online duration, user traffic, user reliability deployment, and user IP address allocation.

Optionally, the sending, by the RADIUS server, the user information to a CGN device specifically is: sending, by the RADIUS server, a change of authenticator request message to the CGN device, where the change of authenticator request message carries the user information of the user.

According to another aspect of an embodiment of the present invention, a method for providing user information to a CGN device, includes:
receiving, by a BRAS device, access-accept response information of a user sent by a RADIUS server; and
sending, by the BRAS device, user information of the user stored in the BRAS device to a CGN device, so that the CGN device is capable of performing network management on the user according to the user information, where the user information includes: a user identity and management information of the user.

Optionally, the user identity includes one or more of the following: a user name, a user password, a user type, a user Internet Protocol IP address, a user media access control MAC address, and user location information.

Optionally, the management information of the user includes one or more of the following: user bandwidth, a user access right, a user priority, a user online duration, user traffic, user reliability deployment, and user IP address allocation.

Optionally, the sending, by the RADIUS server, the user information to a CGN device specifically is: sending, by the RADIUS server, a change of authenticator request message to the CGN device, where the change of authenticator request message carries the user information of the user.

According to still another aspect of an embodiment of the present invention, a remote authentication dial in user service RADIUS server includes:
an accounting start request information receiving unit, configured to receive accounting start request information of a user sent by a broadband remote access server BRAS device, where the accounting start request information carries user information of the user, and the user information includes: a user identity and management information of the user; and
a user information sending unit, configured to send the user information to a carrier grade network address translation CGN device, so that the CGN device is capable of performing network management on the user according to the user information.

Optionally, the user identity includes one or more of the following: a user name, a user password, a user type, a user Internet Protocol IP address, a user media access control MAC address, and user location information.

Optionally, the management information of the user includes one or more of the following: user bandwidth, a user access right, a user priority, a user online duration, user traffic, user reliability deployment, and user IP address allocation.

Optionally, the sending, by the RADIUS server, the user information to a CGN device specifically is: sending, by the RADIUS server, a change of authenticator request message to the CGN device, where the change of authenticator request message carries the user information of the user.

According to yet another aspect of an embodiment of the present invention, a broadband remote access server BRAS device includes:
an access-accept response information receiving unit, configured to receive access-accept response information of a user sent by a remote authentication dial in user service RADIUS server; and
a user information sending unit, configured to send user information of the user stored in a BRAS device to a carrier grade network address translation CGN device, so that the CGN device is capable of performing network management on the user according to the user information, and the user information includes: a user identity and management information of the user.

Optionally, the user identity includes one or more of the following: a user name, a user password, a user type, a user Internet Protocol IP address, a user media access control MAC address, and user location information.

Optionally, the management information of the user includes one or more of the following: user bandwidth, a user access right, a user priority, a user online duration, user traffic, user reliability deployment, and user IP address allocation.

Optionally, the sending, by the RADIUS server, the user information to a CGN device specifically is: sending, by the RADIUS server, a change of authenticator request message to the CGN device, where the change of authenticator request message carries the user information of the user.

It can be seen from the foregoing technical solutions that, in the technical solutions provided in the embodiments of the present invention, a RADIUS server receives accounting start request information of a user sent by a BRAS device, where the accounting start request information carries user information of the user, and then the RADIUS server sends the user information to a CGN device. The accounting start request information of the user received by the RADIUS server carries the user information of the user, and the RADIUS server is capable of sending the user information of the user to the CGN device. Therefore, the CGN device is capable of performing network management on the user according to the user information after receiving the user information.

In another solution provided in the embodiment of the present invention, after a BRAS device receives access-accept response information of a user sent by a RADIUS server, the BRAS device sends user information of the user to a CGN device. After the BRAS device receives the access-accept response information of the user sent by the RADIUS server, the BRAS device is capable of identifying which user needs to send the user information according to the access-accept response information of the user. Eventually, the BRAS device sends the user information of the user stored therein to the CGN device. Therefore, the CGN device is capable of performing network management on the user according to the user information after receiving the user information.

### BRIEF DESCRIPTION OF DRAWINGS

To illustrate the technical solutions according to the embodiments of the present invention more clearly, the accompanying drawings for describing the embodiments are introduced briefly in the following. Apparently, the accompanying drawings in the following description are only some embodiments of the present invention, and persons skilled in the art can derive other drawings from the accompanying drawings without creative efforts.
FIG. 1 is a schematic flow chart of a method for providing user information to a CGN device provided in Embodiment 1 of the present invention;
FIG. 2 is a schematic flow chart of a method for providing user information to a CGN device provided in Embodiment 2 of the present invention;
FIG. 3 is a schematic diagram of a RADIUS packet format provided in Embodiment 2 of the present invention;
FIG. 4 is a schematic diagram of a RADIUS server provided in Embodiment 3 of the present invention;
FIG. 5 is a schematic flow chart of a method for providing user information to a CGN device provided in Embodiment 4 of the present invention;
FIG. 6 is a schematic flow chart of a method for providing user information to a CGN device provided in Embodiment 5 of the present invention; and
FIG. 7 is a schematic diagram of a BRAS device provided in Embodiment 6 of the present invention.

### DESCRIPTION OF EMBODIMENTS

Embodiments of the present invention provide a method and device for providing user information to a CGN device, so as to provide user information to the CGN device and enable the CGN device to perform user-based network management.

To make the objectives, features, and advantages of the present invention clearer and more comprehensible, the following describes the technical solutions in the embodiments of the present invention in detail with reference to the accompanying drawings in the embodiments of the present invention. Apparently, the described embodiments are only a part rather than all of the embodiments of the present invention of the invention.

### Embodiment 1

According to an embodiment of the present invention, a method for implementing providing user information to a CGN device may include: receiving, by a RADIUS server, accounting start request information of a user sent by a BRAS device, where the accounting start request information carries user information of the user; and sending, by the RADIUS server, the user information to a CGN device.

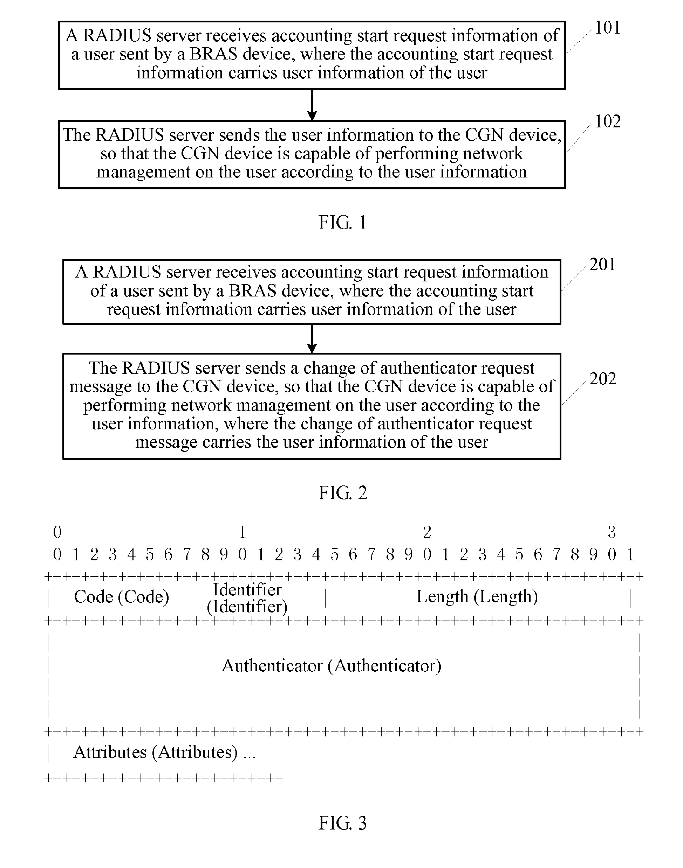

Referring to FIG. 1, the method for providing user information to a CGN device may include the following steps:
101: A RADIUS server receives accounting start request information of a user sent by a BRAS device, where the accounting start request information carries user information of the user.

In the embodiment of the present invention, after a user inputs a user name and a password and a BRAS device sends access-request information (access-request) to a RADIUS server according to the acquired user name and password, the RADIUS server performs comparative analysis on the user information and users (users) database information. If authentication is successful, the RADIUS server sends access-accept response information (access-accept) to the BRAS device, indicating that the user has an access right. Next, the BRAS device permits the access of the user according to a received authentication result, sends the accounting start request information (accounting-request) to the RADIUS server, and the RADIUS server may receive the accounting start request information of the user sent by the BRAS device. The accounting start request information carries the user information of the user. In the embodiment of the present invention, the user information may be various information required by the CGN device to perform user-based network management. The user information may include: content such as a user identity and management information of the user. The user identity is visible information used to identity different users in various packets. The user identity may specifically include one or more of the following: a user name, a user password, a user type, a user IP address, a user media access control (MAC, Media Access Control) address, user location information, and other specific identities of the user. The management information may include one or more of the following: user bandwidth, a user access right, a user priority, a user online duration, user traffic, user reliability deployment, and user IP address allocation.

In the prior art, there is no user information on the CGN device, and therefore the CGN device cannot perform user-based network management. As a terminal of a dual stack lite tunnel, the CGN device can identify the user based on only an IPv6 address. In fact, usually an IPv6 address is randomly allocated to a user, and relevant information of the user cannot be obtained from the IPv6 address. Therefore, the CGN device can perform simple management based on only information such as VLAN and an IP address, and cannot perform user-based network management.

102: The RADIUS server sends the user information to the CGN device, so that the CGN device is capable of performing network management on the user according to the user information.

After the RADIUS server receives the accounting start request information of the user sent by the BRAS device, because the accounting start request information carries the user information of the user, the RADIUS server is capable of acquiring the user information of the user through the accounting start request information. Next, the RADIUS server sends the user information to the CGN device. Therefore, the CGN device is capable of performing network management on the user according to the user information after receiving the user information. The user information includes the management information of the user. The management information of the user is specific content and a management form of network management to be performed by the CGN device, where specific implementation may be specified by the user, or may be decided by a mobile carrier.

The CGN device may specifically perform the following network management according to the user information:
1. user management: including user bandwidth, a user access right, a user priority, a user online duration, user traffic, user reliability deployment, and user IP address allocation; and
2. NAT management: including public network address planning of the user, the number of public network sessions (session) of the user, a public network address lease of the user, public network traffic bandwidth control of the user, NAT application layer gateway (ALG, Application Layer Gateways) configuration of the user, a NAT log transmission period of the user, and deployment of NAT reliability of the user.

It can be seen from the foregoing that, in the embodiment of the present invention, a RADIUS server receives accounting start request information of a user sent by a BRAS device, where the accounting start request information carries user information of the user, and then the RADIUS server sends the user information to the CGN device. The accounting start request information of the user received by the RADIUS server carries the user information of the user, and the RADIUS server is capable of sending the user information of the user to the CGN device. Therefore, the CGN device is capable of performing network management on the user according to the user information after receiving the user information.

### Embodiment 2

To better understand the technical solutions of the embodiments of the present invention, the technical solution in the embodiment of the present invention is described in further detail with a more specific example in the following.

Referring to FIG. 2, a method for implementing providing user information to a CGN device may include the following steps:
201: A RADIUS server receives accounting start request information of a user sent by a BRAS device, where the accounting start request information carries user information of the user.

In the embodiment of the present invention, after a user inputs a user name and a password and a BRAS device sends access-request information to a RADIUS server according to the acquired user name and password, the RADIUS server performs comparative analysis on the user information and users (users) database information. If authentication is successful, the RADIUS server sends access-accept response information to the BRAS device, indicating that the user has an access right. Next, the BRAS device permits the access of the user according to a received authentication result, sends the accounting start request information to the RADIUS server, and the RADIUS server may receive the accounting start request information of the user sent by the BRAS device. The accounting start request information carries the user information of the user. In the embodiment of the present invention, the user information is various information required by the CGN device to perform user-based network management. The user information includes: content such as a user identity and management information of the user. The user identity is visible information used to identity different users in various packets. In actual implementation, the user identity may specifically include one or more of the following: a user name, a user password, a user type, a user IP address, a user MAC address, user location information, and other specific identities of the user. The management information may include one or more of the following: user bandwidth, a user access right, a user priority, a user online duration, user traffic, user reliability deployment, and user IP address allocation. It should be noted that, the content of the management information of the user differs with actual implementation scenario, and it is merely an example for illustration, which is not used as limitation.

202: The RADIUS server sends a change of authenticator request message to the CGN device, so that the CGN device is capable of performing network management on the user according to the user information, where the change of authenticator request message carries the user information of the user.

After the RADIUS server receives the accounting start request information of the user sent by the BRAS device, because the accounting start request information carries the user information of the user, the RADIUS server is capable of acquiring the user information of the user through the accounting start request information. Next, the RADIUS server sends the change of authenticator request (CoA, Change of Authenticator) message to the CGN device, where the change of authenticator request message carries the user information of the user. In specific and actual implementation, the RADIUS server may use an existing RADIUS packet, which is shown in FIG. 3 in which a RADIUS packet format is shown. In the RADIUS packet, a packet in which the value of a Code domain is 43 is used as follows:
Code = 43-CoA-Request [RFC2882], which may specifically extend a new attribute for the packet, so as to carry the user information of the user, or carry the user identity and a policy template of the user, where the policy template includes specific service parameters of relevant service modules of the CGN device for performing service management. It should be noted that, in actual implementation, the user information of the user may also be sent to the CGN device in other manners, for example, by using a new protocol interface which is extended.

Therefore, the CGN device is capable of acquiring the user information of the user after receiving the change of authenticator request message, and performing network management on the user according to the user information, where the user information includes the management information of the user. The management information of the user is specific content and a management form of network management to be performed by the CGN device, where specific implementation may be specified by the user, or may be decided by a mobile carrier, and the specific network management performed by the CGN device includes:
1. user management: including user bandwidth, a user access right, a user priority, a user online duration, user traffic, user reliability deployment, and user IP address allocation; and
2. NAT management: including public network address planning of the user, the number of public network sessions of the user, a public network address lease of the user, public network traffic bandwidth control of the user, NAT ALG configuration of the user, a NAT log submission period of the user, and deployment of NAT reliability of the user.

It can be seen from the foregoing that, in the embodiment of the present invention, a RADIUS server receives accounting start request information of a user sent by a BRAS device, where the accounting start request information carries user information of the user, and then the RADIUS server sends a change of authenticator request message to a CGN device, where the change of authenticator request message carries the user information of the user. The accounting start request information of the user received by the RADIUS server carries the user information of the user, and the RADIUS server is capable of sending the user to the CGN device through the change of authenticator request message. Therefore, the CGN device is capable of performing network management on the user according to the user information after acquiring the user information.

To better implement the technical solutions of the foregoing embodiments of the present invention, the embodiments of the present invention further provide relevant devices for implementing the foregoing technical solutions in the following.

### Embodiment 3

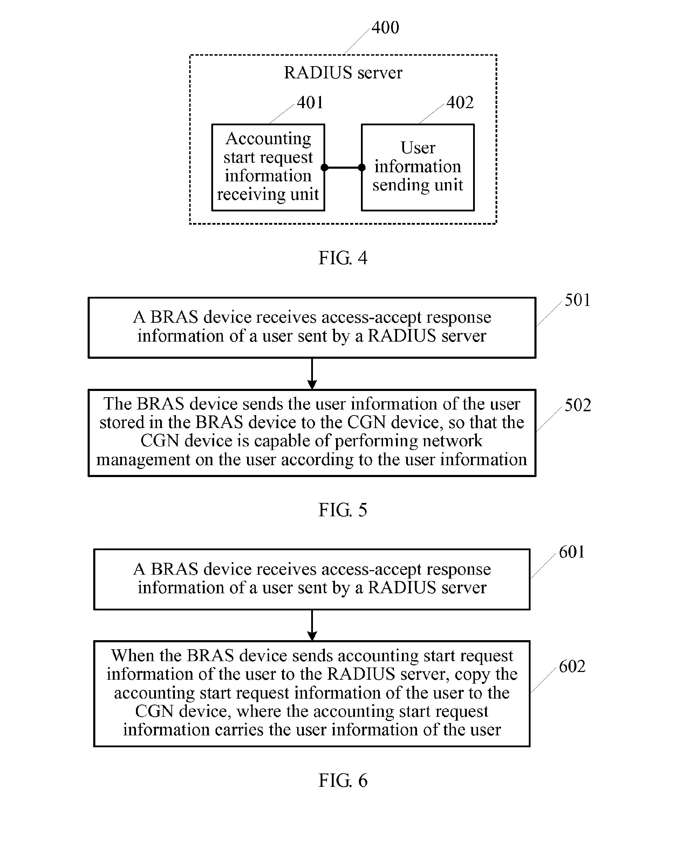

Referring to FIG. 4, a RADIUS server 400 provided in an embodiment of the present invention may include: an accounting start request information receiving unit 401 and a user information sending unit 402.

The accounting start request information receiving unit 401 is configured to receive accounting start request information of a user sent by a BRAS device, where the accounting start request information carries user information of the user, and the user information includes: a user identity and management information of the user.

In actual implementation, after the user authentication is successful, the BRAS device enable the access of the user according to a received authentication result, and sends the accounting start request information to the RADIUS server. The accounting start request information receiving unit 401 may receive the accounting start request information of the user sent by the BRAS device, where the accounting start request information carries the user information of the user. In the embodiment of the present invention, the user information is various information required by the CGN device to perform user-based network management. The user information includes: content such as a user identity and management information of the user. The user identity is visible information used to identity different users in various packets. In actual implementation, the user identity may specifically include one or more of the following: a user name, a user password, a user type, a user IP address, a user MAC address, user location information, and other specific identities of the user. The management information may include one or more of the following: user bandwidth, a user access right, a user priority, a user online duration, user traffic, user reliability deployment, and user IP address allocation.

The user information sending unit 402 is configured to send the user information of the user to a CGN device, so that the CGN device is capable of performing network management on the user according to the user information.

After the accounting start request information receiving unit 401 receives the accounting start request information of the user sent by the BRAS device, because the accounting start request information carries the user information of the user, the RADIUS server is capable of acquiring the user information of the user through the accounting start request information. Next, the user information sending unit 402 sends the user information to the CGN device. Therefore, the CGN device is capable of performing network management on the user according to the user information after receiving the user information. The user information includes the management information of the user. The management information of the user is specific content and a management form of network management to be performed by the CGN device, where specific implementation may be specified by the user, or may be decided by a mobile carrier.

In an application scenario, the sending, by the user information sending unit 402, the user information of the user to the CGN device specifically includes: sending the change of authenticator request message to the CGN device, where the change of authenticator request message carries the user information of the user. As shown in FIG. 3, a RADIUS packet format is shown. In the RADIUS packet, a packet in which the value of a Code domain is 43 is used as follows:

Code = 43-CoA-Request [RFC2882], which may specifically extend a new attribute for the packet, so as to carry the user information of the user, or carry the user identity and a policy template of the user, where the policy template includes specific service parameters of relevant service modules of the CGN device for performing service management. It should be noted that, in actual implementation, the user information of the user may also be sent to the CGN device in other manners, for example, by using a new protocol interface which is extended.

It can be seen from the foregoing that, in the embodiment of the present invention, the accounting start request information receiving unit 401 receives the accounting start request information of the user sent by the BRAS device, where the accounting start request information carries the user information of the user, and then the user information sending unit 402 sends the user information to the CGN device. The accounting start request information of the user received by the accounting start request information receiving unit 401 carries the user information of the user, and the user information sending unit 402 is capable of sending the user information of the user to the CGN device. Therefore, the CGN device is capable of performing network management on the user according to the user information after receiving the user information.

### Embodiment 4

According to an embodiment of the present invention, a method for providing user information to a CGN device may include: receiving, by a BRAS device, access-accept response information of a user sent by a RADIUS server; and sending, by the BRAS device, user information of the user to a CGN device.

Referring to FIG. 5, a method for providing user information to a CGN device may include the following steps:
501: A BRAS device receives access-accept response information of a user sent by a RADIUS server.

In the embodiment of the present invention, after a user inputs a user name and a password and a BRAS device sends access-request information to a RADIUS server according to the acquired user name and password, the RADIUS server performs comparative analysis on the user information and users database information. If authentication is successful, the RADIUS server sends the access-accept response information to the BRAS device, and if the BRAS device receives the access-accept response information of the user sent by the RADIUS server, it indicates that the user has an access right, and the BRAS device permits the access of the user according to a received authentication result.

502: The BRAS device sends the user information of the user stored in the BRAS device to the CGN device, so that the CGN device is capable of performing network management on the user according to the user information.

After the BRAS device receives the access-accept response information of the user sent by the RADIUS server, the BRAS device sends the user information of the user to the CGN device. Therefore, the CGN device is capable of performing network management on the user according to the user information after receiving the user information. The user information is stored in the BRAS device, and after the BRAS device receives the access-accept response information of the user, the BRAS device is capable of acquiring that the user information of which user should be sent to the CGN device, so that the CGN device is capable of implementing network management on the user. The user information includes: content such as a user identity and management information of the user. The user identity is visible information used to identity different users in various packets. In actual implementation, the user identity may specifically include one or more of the following: a user name, a user password, a user type, a user IP address, a user MAC address, user location information, and other specific identities of the user. The management information may include one or more of the following: user bandwidth, a user access right, a user priority, a user online duration, user traffic, user reliability deployment, and user IP address allocation.

The CGN device may specifically perform the following network management after receiving the accounting start request information of the user:
1. user management: including user bandwidth, a user access right, a user priority, a user online duration, user traffic, user reliability deployment, and user IP address allocation; and
2. NAT management: including public network address planning of the user, the number of public network sessions of the user, a public network address lease of the user, public network traffic bandwidth control of the user, NAT ALG configuration of the user, a NAT log submission period of the user, and deployment of NAT reliability of the user.

It can be seen from the foregoing that, in the embodiment of the present invention, after a BRAS device receives access-accept response information of a user sent by a RADIUS server, the BRAS device sends user information of the user to a CGN device. After the BRAS device receives the access-accept response information of the user sent by the RADIUS server, the BRAS device is capable of identifying which user needs to send the user information according to the access-accept response information of the user. Eventually, the BRAS device sends the user information of the user stored therein to the CGN device. Therefore, the CGN device is capable of performing network management on the user according to the user information after receiving the user information.

### Embodiment 5

To better understand the technical solutions of the embodiments of the present invention, the technical solution in the embodiment of the present invention is described in further detail with a more specific example in the following.

Referring to FIG. 6, the following specific steps may be included:
601: A BRAS device receives access-accept response information of a user sent by a RADIUS server.

In the embodiment of the present invention, after a user inputs a user name and a password and a BRAS device sends access-request information to a RADIUS server according to the acquired user name and password, the RADIUS server performs comparative analysis on the user information and users database information. If authentication is successful, the RADIUS server sends the access-accept response information to the BRAS device, and if the BRAS device receives the access-accept response information of the user sent by the RADIUS server, it indicates that the user has an access right, and the BRAS device permits the access of the user according to a received authentication result.

602: When the BRAS device sends accounting start request information of the user to the RADIUS server, copy the accounting start request information of the user to the CGN device, where the accounting start request information carries the user information of the user.

After the BRAS device receives the access-accept response information of the user sent by the RADIUS server, and when the BRAS device sends the accounting start request information of the user to the RADIUS server, the accounting start request information of the user is copied to the CGN device, where the accounting start request information carries the user information of the user. Therefore, the CGN device is capable of performing network management on the user according to the user information after receiving the user information. The user information is stored in the BRAS device, and after the BRAS device receives the access-accept response information of the user, the BRAS device is capable of acquiring that the user information of which user should be sent to the CGN device, so that the CGN device is capable of implementing network management on the user. The user information includes: content such as a user identity and management information of the user, where the user identity is visible information used to identity different users in various packets. In actual implementation, the user identity may specifically include one or more of the following: a user name, a user password, a user type, a user IP address, a user MAC address, user location information, and other specific identities of the user. The management information may include one or more of the following: user bandwidth, a user access right, a user priority, a user online duration, user traffic, user reliability deployment, and user IP address allocation. It should be noted that, the content of the management information of the user differs with actual implementation scenario, and it is merely an example for illustration, which is not used as limitation.

In specific and actual implementation, the BRAS device may use an existing RADIUS packet when constructing the accounting start request information, which is shown in FIG. 3 in which a RADIUS packet format is shown. In the RADIUS packet, a packet in which the value of a Code domain is 4 is used as follows:
Code = 4-Accounting-Request [RFC2882], which may specifically extend a new attribute for the packet, so as to carry the user information of the user, or carry the user identity and a policy template of the user, where the policy template includes specific service parameters of relevant service modules of the CGN device for performing service management. It should be noted that, in actual implementation, the user information of the user may also be sent to the CGN device in other manners, for example, by using a new protocol interface which is extended.

The CGN device may specifically perform the following network management according to the user information after receiving the accounting start request information of the user:
1. user management: including user bandwidth, a user access right, a user priority, a user online duration, user traffic, user reliability deployment, and user IP address allocation; and
2. NAT management: including public network address planning of the user, the number of public network sessions of the user, a public network address lease of the user, public network traffic bandwidth control of the user, NAT ALG configuration of the user, a NAT log submission period of the user, and deployment of NAT reliability of the user.

It can be seen from the foregoing that, in the embodiment of the present invention, after a BRAS device receives access-accept response information of a user sent by a RADIUS server, the BRAS device sends user information of the user to a CGN device. After the BRAS device receives the access-accept response information of the user sent by the RADIUS server, the BRAS device is capable of identifying which user needs to send the user information according to the access-accept response information of the user. Eventually, the BRAS device sends the user information of the user stored therein to the CGN device. Therefore, the CGN device is capable of performing network management on the user according to the user information after receiving the user information.

To better implement the technical solutions of the foregoing embodiments of the present invention, the embodiments of the present invention further provide relevant devices for implementing the foregoing technical solutions in the following.

### Embodiment 6

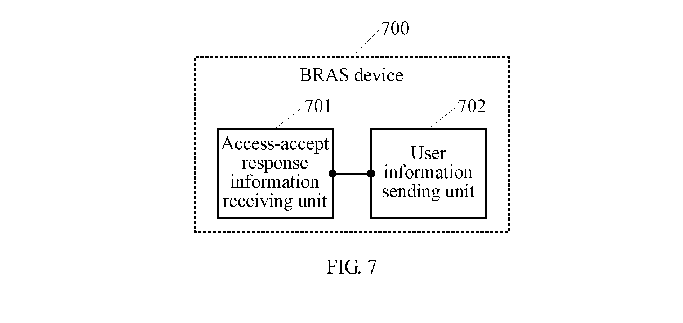

Referring to FIG. 7, a BRAS device 700 provided in Embodiment 6 of the present invention includes: an access-accept response information receiving unit 701 and a user information sending unit 702.

The access-accept response information receiving unit 701 is configured to receive access-accept response information of a user sent by a RADIUS server.

In the embodiment of the present invention, when the RADIUS server performs comparative analysis on user information of a user and users database information, if authentication is successful, the RADIUS server sends the access-accept response information to the access-accept response information receiving unit 701, and the access-accept response information receiving unit 701 is capable of receiving the access-accept response information of the user sent by the RADIUS server, indicating that the user has an access right, the access of which is allowed.

The user information sending unit 702 is configured to send the user information of the user to a CGN device, so that the CGN device is capable of performing network management on the user according to the user information.

After the access-accept response information receiving unit 701 receives the access-accept response information of the user sent by the RADIUS server, the user information sending unit 702 sends the user information of the user stored in the BRAS device 700 to the CGN device, so that the CGN device is capable of performing network management on the user according to the user information. The user information includes: content such as a user identity and management information of the user. The user identity is visible information used to identity different users in various packets. In actual implementation, the user identity may specifically include one or more of the following: a user name, a user password, a user type, a user IP address, a user MAC address, user location information, and other specific identities of the user. The management information may include one or more of the following: user bandwidth, a user access right, a user priority, a user online duration, user traffic, user reliability deployment, and user IP address allocation. It should be noted that, the content of the management information of the user differs with actual implementation scenario, and it is merely an example for illustration, which is not used as limitation.

In an application scenario, the sending, by the user information sending unit 702, the user information of the user to the CGN device specifically includes: when sending the accounting start request information of the user to the RADIUS server, copying the accounting start request information of the user to the CGN device, where the accounting start request information carries the user information of the user. As shown in FIG. 3, a RADIUS packet format is shown. In the RADIUS packet, a packet in which the value of a Code domain is 4 is used as follows:
Code = 4-Accounting-Request [RFC2882], which may specifically extend a new attribute for the packet, so as to carry the user information of the user, or carry the user identity and a policy template of the user, where the policy template includes specific service parameters of relevant service modules of the CGN device for performing service management. It should be noted that, in actual implementation, the user information of the user may also be sent to the CGN device in other manners, for example, by using a new protocol interface

The CGN device may specifically perform the following network management after receiving the accounting start request information of the user:
1. user management: including user bandwidth, a user access right, a user priority, a user online duration, user traffic, user reliability deployment, and user IP address allocation; and
2. NAT management: including public network address planning of the user, the number of public network sessions of the user, a public network address lease of the user, public network traffic bandwidth control of the user, NAT ALG configuration of the user, a NAT log submission period of the user, and deployment of NAT reliability of the user.

It can be seen from the foregoing that, in the embodiment of the present invention, after the access-accept response information receiving unit 701 receives access-accept response information of a user sent by a RADIUS server, the user information sending unit 702 sends user information of the user to a CGN device. After the access-accept response information receiving unit 701 receives the access-accept response information of the user sent by the RADIUS server, the BRAS device is capable of identifying which user needs to send the user information according to the access-accept response information of the user. Eventually, the user information sending unit 702 is capable of sending the user information of the user stored in the BRAS device to the CGN device. Therefore, the CGN device is capable of performing network management on the user according to the user information after receiving the user information.

Persons of ordinary skill in the art should understand that all or a part of the steps in the method according to the embodiments may be implemented by a program instructing relevant hardware. The program may be stored in a computer readable storage medium. The storage medium may include such as a ROM, a RAM, a magnetic disk, and an optical disk.

The method and device for providing user information to a CGN device provided in the embodiments of the present invention are described in detail above. Herein, the principle and implementation of the present invention are set forth through specific examples. The description of the embodiments is merely provided for ease of understanding the method and core ideas of the present invention. Persons of ordinary skill in the art can make modifications and variations to the present invention in terms of the specific implementation and application scope according to the ideas of the present invention. Therefore, the specification shall not be construed as a limit to the present invention.

## Claims

1. A method for providing user information to a carrier grade network address translation CGN device, comprising:
receiving, by a remote authentication dial in user service RADIUS server, accounting start request information of a user sent by a broadband remote access server BRAS device, wherein the accounting start request information carries user information of the user, and the user information comprises: a user identity and management information of the user; and
sending, by the RADIUS server, the user information to a CGN device, so that the CGN device is capable of performing network management on the user according to the user information.

2. The method for providing user information to a CGN device according to claim 1, wherein the user identity comprises one or more of the following: a user name, a user password, a user type, a user Internet Protocol IP address, a user media access control MAC address, and user location information.

3. The method for providing user information to a CGN device according to claim 1 or 2, wherein the management information of the user comprises one or more of the following: user bandwidth, a user access right, a user priority, a user online duration, user traffic, user reliability deployment, and user IP address allocation.

4. The method for providing user information to a CGN device according to claim 1 or 2 or 3, wherein the sending, by the RADIUS server, the user information to a CGN device specifically is:
sending, by the RADIUS server, a change of authenticator request message to the CGN device, wherein the change of authenticator request message carries the user information of the user.

5. A method for providing user information to a carrier grade network address translation CGN device, comprising:
receiving, by a broadband remote access server BRAS device, access-accept response information of a user sent by a remote authentication dial in user service RADIUS server; and
sending, by the BRAS device, user information of the user stored in the BRAS device to a CGN device, so that the CGN device is capable of performing network management on the user according to the user information, wherein the user information comprises: a user identity and management information of the user.

6. The method for providing user information to a CGN device according to claim 5, wherein the user identity comprises one or more of the following: a user name, a user password, a user type, a user Internet Protocol IP address, a user media access control MAC address, and user location information.

7. The method for providing user information to a CGN device according to claim 5 or 6, wherein the management information of the user comprises one or more of the following: user bandwidth, a user access right, a user priority, a user online duration, user traffic, user reliability deployment, and user IP address allocation.

8. The method for providing user information to a CGN device according to claim 5 or 6 or 7, wherein the sending, by the BRAS device, user information to a CGN device specifically is:
when the BRAS device sends the accounting start request information of the user to the RADIUS server, copying the accounting start request information of the user to the CGN device, wherein the accounting start request information carries the user information of the user.

9. A remote authentication dial in user service RADIUS server, comprising:
an accounting start request information receiving unit, configured to receive accounting start request information of a user sent by a broadband remote access server BRAS device, wherein the accounting start request information carries user information of the user, and the user information comprises: a user identity and management information of the user; and
a user information sending unit, configured to send the user information to a carrier grade network address translation CGN device, so that the CGN device is capable of performing network management on the user according to the user information.

10. The RADIUS server according to claim 9, wherein the user identity comprises one or more of the following: a user name, a user password, a user type, a user Internet Protocol IP address, a user media access control MAC address, and user location information.

11. The RADIUS server according to claim 9 or 10, wherein the management information of the user comprises one or more of the following: user bandwidth, a user access right, a user priority, a user online duration, user traffic, user reliability deployment, and user IP address allocation.

12. The RADIUS server according to claim 9 or 10 or 11, wherein the BRAS device sending the user information to a CGN device specifically is:
when the BRAS device sends the accounting start request information of the user to the RADIUS server, the BRAS device copies the accounting start request information of the user to the CGN device, wherein the accounting start request information carries the user information of the user.

13. A broadband remote access server BRAS device, comprising:
an access-accept response information receiving unit, configured to receive access-accept response information of a user sent by a remote authentication dial in user service RADIUS server; and
a user information sending unit, configured to send user information of the user stored in a BRAS device to a carrier grade network address translation CGN device, so that the CGN device is capable of performing network management on the user according to the user information, and the user information comprises: a user identity and management information of the user.

14. The BRAS device according to claim 13, wherein the user identity comprises one or more of the following: a user name, a user password, a user type, a user Internet Protocol IP address, a user media access control MAC address, and user location information.

15. The BRAS device according to claim 13 or 14, wherein the management information of the user comprises one or more of the following: user bandwidth, a user access right, a user priority, a user online duration, user traffic, user reliability deployment, and user IP address allocation.

16. The BRAS device according to claim 13 or 14 or 15, wherein the BRAS device sending the user information to a CGN device specifically is:
when the BRAS device sends the accounting start request information of the user to the RADIUS server, the BRAS device copies the accounting start request information of the user to the CGN device, wherein the accounting start request information carries the user information of the user.
